# EUROPEAN PATENT APPLICATION

(11) **EP 2 876 203 A1**
(43) Date of publication of application: **27.05.2015**
(21) Application number: 13194323.5
(22) Date of filing: 25.11.2013
(51) Int. Cl.: D21C 5/02, D21C 9/00, D21F 5/00, D21H 25/00, D21H 25/02

(54) **Supercritical CO2**

(71) Applicant: CEPI aisbl, 1050 Brussels (BE)
(72) Inventor: The designation of the inventor has not yet been filed
(74) Representative: Kinkeldey, Daniela

(57) **Abstract**

The present invention relates to process comprising the treatment of paper or fibres with supercritical CO₂.

## Description

The present invention relates to a process comprising the treatment of paper or fibres with supercritical CO₂.

### BACKGROUND OF THE INVENTION

Supercritical CO₂ is used since 2011 at commercial scale for colouring textiles for large operators such as NIKE, Adidas and IKEA[1] [2] [3]. It is widely used for decaffeination of tea leaves and coffee beans since the early 80s [4] [5] [6] [7] [8]. It is now also used for drying of vegetables, fruits and flowers. It allows extraction of valuable components from all kinds of materials and extraction of non-valuable components for purification purposes. Carbon dioxide is the most desirable supercritical fluid (SCF) solvent for extraction of natural products for foods and pharmaceuticals today.

When a gas is compressed to a sufficiently high pressure, it becomes liquid. If, on the other hand, the gas is heated beyond a specific temperature, no amount of compression of the hot gas will cause it to become a liquid. This temperature is called the critical temperature (Tc) and the corresponding vapour pressure is called the critical pressure (Pc). The substance in supercritical state is not a gas, not a liquid, but somewhere in between. The state of the substance is called supercritical fluid (SCF) when both the temperature and pressure exceed the critical point values as described in the pressure-temperature phase diagram[9].

This "fluid" now takes on many of the remarkable properties of both gas and liquid. It is the region where the maximum solvent capacity and the largest variations in solvent properties can be achieved with small changes in temperature and pressure. It offers very attractive extraction characteristics, owing to its favourable diffusivity, low viscosity, moderate to low surface tension and other physical properties. Its diffusivity is one to two orders of magnitude higher than those of liquids, which facilitates rapid mass transfer and faster completion of extraction than conventional liquid solvents. The gas-like characteristics provide ideal conditions for extraction of solutes giving a high degree of recovery in a short period of time.

It is an inert, inexpensive, easily available, odourless, tasteless solvent. There is no solvent residue in the extract, since it is a gas in the ambient condition. Also its near-ambient critical temperature (31.1°C) requires little energy to bring CO₂ in supercritical state. CO₂ can be obtained from industrial gas producers. It is a by-product of ammonia production and beer brewing. When in the future carbon capture technologies have been further optimized and create pure CO₂ streams from other sectors, part of the CO₂ could even come from other production facilities at the industry site. The paper sector has experience already with the use of process CO₂ in the production of precipitated calcium carbonate (PCC). Carbon Capture and Use replaces Carbon Capture and Storage

Supercritical CO₂ has several applications, in particular extraction drying, replacing the drying section of existing paper machines, cleaning and drying fibres in a recycling process, colouring (dying) of fibres in pulp and paper.

### SUMMARY OF THE INVENTION

It is an object of the invention to provide new processes, which allow using less water and energy in a process for making pulp and paper.

The present invention therefore provides in a first aspect a process for producing paper comprising treating wet paper, preferably after it has been pressed, in an autoclave with supercritical CO₂.

In a second aspect, it is provided a process for removing stickies and waxes from recycled fibres or the recycled pulp comprising treating the recycled fibres or the recycled pulp with supercritical CO₂.

In a third aspect, it is provided a process for processing recycled fibres or recycled pulp comprising drying the fibres or the pulp with supercritical CO₂ and removing contaminants from the fibres or the pulp with supercritical CO₂ at the same time.

In a fourth aspect, it is provided a process for dying or colouring pulp and paper with supercritical CO₂.

### DETAILED DESCRIPTION OF THE INVENTION

Before the present invention is described in detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

"Paper" refers to a thin material currently produced by pressing together moist fibers, typically cellulose pulp derived from wood, rags or grasses, and drying them into sheets. A definition may be found in NACE chapter 17 (Manufacture of paper and paper products, Statistical classification of economic activities in the European Community, chapter 17.12 Manufacture of paper and paperboard and chapter 17.2 Manufacture of articles of paper and paperboard) and PRODCOM 48.

"Pulping" is a processing of wood, wood chips or other lignocellulosic materials (containing agricultural or agro-industrial side streams) and the like to isolate individual fibres. Pulps produced thereby can often be further subjected to bleaching and purification operations in a bleach plant, including further delignification of the pulp. A definition may be found in NACE, chapter 17 (Manufacture of paper and paper products, Statistical classification of economic activities in the European Community, chapter 17.1 Manufacture of pulp) and PRODCOM 47.

### Extraction drying

This aspect relates to replacing water in pulp and paper with supercritical CO₂ (scCO₂) to allow for more efficient drying of the wet pulp paper. Steam heated cylinders used today in this process will then be replaced by autoclaves and pressure.

In particular, a process for producing paper comprising treating or extraction drying wet paper, preferably after it has been pressed in sheet form, in an autoclave with supercritical CO₂ is provided.

As used herein, "extraction drying" means a process in which water is removed by extraction.

Extraction drying with scCO₂ utilizes existing paper machine wet-end and press sections, so the traditional paper forming section remains the same. The difference is that paper will no longer be transferred from the press section to the dryer section. Instead the wet paper, e.g. in form of a reel, will be transferred into an autoclave, using the paper after the press section at about 60% moisture content. Typically, the wet paper has a dry solid content of 10 wt.% to 80 wt.%, preferably 30 wt.% to 70 wt.%, more preferably 40 wt.% to 60 wt.%, before it is treated in the autoclave with supercritical CO₂. The wet paper may be treated in the autoclave with supercritical CO₂ at a pressure of 80 to 450 bar, preferably 90 to 250 bar and more preferably 100 to200 bar. Moreover, the wet paper may be treated in the autoclave with supercritical CO₂ at a temperature of 31 to 200°C, preferably 50 to 110°C and more preferably 80 to 100°C. Typically, the wet paper is treated in the autoclave with supercritical CO₂ gradually from lower to higher pressures.

The paper machine will be much shorter. After pressing, the reel of paper is transferred to the autoclave for extraction drying in scCO₂. After loading the autoclave is pressurized. The reel is dried under supercritical CO₂ conditions (>80 bar and >31°C). The process takes place gradually from lower to higher pressures. The scCO₂ is passed through the paper reel, from the inside of the reel. Due to low viscosity and high level of diffusivity of scCO₂ it is possible to extract the remaining water.

To allow the combination of the batch wise extraction drying process with the continuous paper making process, at least two autoclaves are needed, being used alternately and sharing the same CO₂ system.

Tests have proven that 50% moisture paper can be completely dried in a scCO₂ autoclave, resulting in paper that has similar characteristics to paper dried utilizing a traditional dryer section. There may be a requirement for a calendering step after drying to improve printability.

The water is removed and recovered for re-use in the paper process; the liquid CO₂ is recovered in a closed loop. The water solubility in scCO₂ depends on pressure and temperature. Once you reduce the pressure to reduce the water solubility in scCO₂, water can be recovered. There is also a certain amount of water still dissolved into scCO₂, which may need additional drying.

### Removing of stickies and/or waxes from recycled fibres or pulp

In a second aspect, it is provided a process for removing stickies from recycled fibres or recycled pulp comprising treating the recycled fibres or the recycled pulp with supercritical CO₂.

Typically, stickies are tacky substances contained in the paper pulp and process water systems of paper machines. Stickies have a large tendency to make deposits on the processing equipment in certain stages of the papermaking process. Contaminations of paper that are classified as tacky are also called stickies. The main sources for stickies are recycled paper, waxes, coating components and soft adhesives. Therefore, the stickies are typically selected from waxes, printing inks, coating binders, hot melt adhesive, unsupported pressure-sensitive adhesives, plastics, wet strength resins, pitch and papermaking additives.

In particular, this aspect relates to extract contaminants from recycled pulp, producing a certified "clean" recycled pulp. This gives access to recycled fibre for individual needs of paper makers, from high quality fractionated fibre without inks, solvents, adhesives, stickies and other contaminants to lower quality short fibre and filler fractions. The benefit lies clearly in the fact that the system allows for dry deinked market pulp to be produced in a network of fibre supermarkets. It allows recycling at fibre level, no longer at paper level.

After dry sorting and/or shredding and/or removal of metals and plastics, recovered paper is treated in batches in large autoclaves. Dispersing is done with scCO₂ instead of water. Cleaning, screening and fractionation takes place inside the (sc)CO₂ in the autoclaves. A "system of locks" with different combinations of pressure and temperature is used to extract those components that need to be extracted, leaving the remaining pulp and/or fibres at the desired quality.

The use of scCO₂ overcomes the key disadvantage of the current deinked market pulp production. As no water is used, there is no need for drying or transporting wet pulp.

### Drying and removing of contaminants from recycled fibres or recycled pulp

In a third aspect, it is provided a process for processing recycled fibres or recycled pulp comprising extraction drying/drying the recycled fibres or the recycled pulp with supercritical CO₂ and removing contaminants from the fibres or the pulp with supercritical CO₂ at the same time. The contaminants are typically selected from stickies, mineral oils, inks, residues and/or a combination thereof.

The use of scCO₂ resolves the issue of mineral oil in paper for recycling. The system can remove contaminants such as remaining elements from printing inks and solvents. In particular, one could remove the mineral oils in combination with extraction drying.

Some documents are cited throughout the text of this specification. Each of the documents cited herein (including all patents, patent applications, scientific publications, manufacturer's specifications, instructions, DIN norms etc.), whether supra or infra, are hereby incorporated by reference in their entirety. Nothing herein is to be construed as an admission that the invention is not entitled to antedate such disclosure by virtue of prior invention.

Various modifications and variations of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in the relevant fields are intended to be covered by the present invention.

### Dying or colouring pulp and paper with supercritical CO₂.

In a fourth aspect, it is provided a process for dying or colouring pulp and paper with supercritical CO₂. Typically pulp or paper is brought into a container, typically an autoclave, in which, together with the supercritical CO₂ a dye or colouring agent is brought into the pulp or paper. After removal of the scCO₂ the colourant or dye remains and the pulp or paper is coloured.

### REFERENCES

1 http://nikeinc.com/news/nike-inc-announces-strategic-partnership-to-scale-waterless-dyeing-technology
2 http://www.greenbiz.com/blog/2012/02/07/color-it-green-nike-adopt-waterless-textile-dyeing
3http://www.textileworld.com/Articles/2012/December/November_December_issue/Saving_ Water.html
4 Patent for the extraction of caffeine with supercritical CO2: Zosel, K. (1964) German Patent 1,493,190. http://www.ardi-rhonealpes.fr/c/document_library/get_file?uuid=bfdc13cc-6d8b-46c7-b167-050abf07b544&groupId=10136
5 http://www.ardi-rhonealpes.fr/c/document_library/get_file?uuid=bfdc13cc-6d8b-46c7-b167-050abf07b544&groupId=10136
6 Patent for the extraction of caffeine with supercritical CO2: HAG AG (1978), German patent DE2637197A1
7 UMAX, Selected examples of the commercial scale supercritical CO2 extraction plants http://iumax.koreasme.com/eng/supercritical4.html
8 M. Mc Hugh, V. Krukonis, Supercritical Fluid Extraction, Butterworth-Heinemann Verlag (1994)
9 Walter Leitner, Nature, 200, 405, 11 May, pp 129-130 (http://www.nature.com/nature/journal/v405/n6783/images/405129aa.2.jpg)

## Claims

1. A process comprising the treatment of paper or fibres with supercritical CO₂, which allows using less water and energy in a process for making pulp and paper.

2. The process according to claim 1, wherein the process is a process for producing paper comprising extraction drying of wet paper, preferably after it has been pressed, in an autoclave with supercritical CO₂.

3. The process according to claim 2, wherein the paper is not transferred to a dryer section after it has been pressed.

4. The process according to claim 2 or 3, wherein the wet paper is in form of a reel.

5. The process according to any of claims 2 to 4, wherein the wet paper has a dry solid content of 10 wt.% to 80 wt.%, preferably 30 wt.% to 70 wt.%, more preferably 40 wt.% to 60 wt.%, before it is treated in the autoclave with supercritical CO₂

6. The process according to any of claims 2 to 5, wherein the wet paper is treated in the autoclave with supercritical CO₂ at a pressure of 80 to 450 bar, preferably 90 to 250 bar and more preferably 100 to 200 bar.

7. The process according to any of claims 2 to 6, wherein the wet paper is treated in the autoclave with supercritical CO₂ at a temperature of 31 to 200°C, preferably 50 to 110°C and more preferably 80 to 100°C.

8. The process according to any of claims 2 to 7, wherein the wet paper is treated in the autoclave with supercritical CO₂ gradually from lower to higher pressures.

9. The process according to any of claims 2 to 8, wherein the paper is calendered after it has been treated in the autoclave with supercritical CO₂.

10. The process according to claim 1, wherein the process is a process for processing recycled fibres or recycled pulp comprising
extraction drying the fibres or the recycled pulp with supercritical CO₂ and
removing contaminates from the fibres or the pulp with supercritical CO₂ at the same time.

11. The process according to claim 1, wherein the process is a process for removing stickies and/or waxes from recycled fibres or recycled pulp comprising treating the recycled fibres or the recycled pulp with supercritical CO₂.

12. The process according to claim 11, wherein the stickies are selected from printing inks, coating binders, hot melt adhesive, unsupported pressure-sensitive adhesives, plastics, wet strength resins, pitch and papermaking additives.

13. The process according to claim 11 or 12, wherein the recycled fibres or the recycled pulp is obtained after it has been dry sorted and/or shredded and/or removal of metals and plastics has taken place.

14. The process according to claim 1, wherein the process is a process for dying or colouring pulp and paper comprising bringing pulp or paper into a container together with supercritical CO₂ and a dye or colouring agent.
